# FASCICULE DE BREVET EUROPEEN

(11) **EP 3 377 386 B1**
(45) Date de publication et mention de la délivrance du brevet: **30.12.2020**
(21) Numéro de dépôt: 16809972.9
(22) Date de dépôt: 09.11.2016
(51) Int. Cl.: B62D 6/00, B62D 15/02

(54) **PROCÉDÉ D'AIDE A LA CONDUITE D'UN VÉHICULE AUTOMOBILE**
FAHRERASSISTENZVERFAHREN FÜR EIN KRAFTFAHRZEUG
DRIVER ASSISTANCE METHOD FOR A MOTOR VEHICLE

(30) Priorité: 19.11.2015 FR 1561138
(43) Date de publication de la demande: 26.09.2018
(73) Titulaire: RENAULT s.a.s., 92100 Boulogne-Billancourt (FR)
(72) Inventeur: MINOIU-ENACHE, Nicoleta, 78000 Versailles (FR); LEROY, Philippe.P, 91940 Les Ulis (FR); BARBOTIN, Pascal, 76520 La Neuville Chant d'Oisel (FR); MENANTEAU, Etienne, 75015 Paris (FR); DO, Anh Lam, 92370 Chaville (FR)
(86) Numéro de dépôt international: PCT/FR2016/052906
(87) Numéro de publication internationale: WO 2017/085377

(56) Documents cités:
- WO-A1-2012/068331
- DE-A1-102005 052 034
- US-A1- 2003 078 712
- US-A1- 2008 047 775

## Description

### DOMAINE TECHNIQUE AUQUEL SE RAPPORTE L'INVENTION

La présente invention concerne de manière générale le domaine des procédés d'aide à la conduite pour véhicules automobiles.

Elle concerne plus particulièrement un procédé d'aide à la conduite d'un véhicule automobile empruntant une voie de circulation, comprenant les étapes suivantes :
a) on acquiert au moins une donnée relative à une position du véhicule automobile par rapport à la voie de circulation,
b) on acquiert un couple exercé par un conducteur du véhicule automobile sur un organe de direction du véhicule automobile, et
c) on détermine, en fonction de ladite donnée, un couple correctif à exercer sur ledit organe de direction, compte tenu dudit couple exercé, pour que le véhicule automobile suive une trajectoire cible.

### ARRIERE-PLAN TECHNOLOGIQUE

De nombreux véhicules automobiles sont équipés aujourd'hui d'un système de conduite assistée permettant, par l'intermédiaire d'un moteur électrique, d'exercer un couple supplémentaire sur la colonne de direction du véhicule afin d'aider le conducteur de ce véhicule à manœuvrer le volant de direction de ce véhicule.

Le document US2008/0047775 est considéré comme l'état de la technique le plus proche selon le préambule de la revendication 1 et divulgue un appareil de braquage électrique dans lequel trois couples de compensation sont additionnés à un couple d'assistance de base.

Il est connu également d'équiper un véhicule automobile d'un système d'aide à la conduite comprenant une caméra frontale, ou un autre capteur tel qu'un radar, permettant de déterminer la position de ce véhicule sur la voie de circulation qu'il emprunte.

Lorsqu'un écart du véhicule par rapport au milieu de cette voie de circulation est détecté, ou lorsqu'il est détecté que ce véhicule est sur le point de sortir de cette voie de circulation, un couple correctif peut être exercé sur la colonne de direction du véhicule afin de corriger la trajectoire du véhicule pour le ramener sensiblement au milieu de cette voie de circulation. Ce couple correctif s'ajoute au couple exercé par le conducteur du véhicule sur le volant de direction.

Un tel système d'aide à la conduite, connu du document EP 2 591 983, permet ainsi de limiter les sorties de route du véhicule, et/ou permet de maintenir le véhicule sensiblement au milieu de la voie de circulation qu'il emprunte, sans intervention de son conducteur, ou avec une intervention réduite de ce dernier.

Dans le document EP 2591983 la valeur du couple correctif exercé sur la colonne de direction du véhicule est modulée en tenant compte du couple exercé par le conducteur du véhicule sur le volant de direction de ce véhicule, et en tenant compte du fait que le véhicule automobile roule en ligne droite ou aborde au contraire un virage serré.

Mais, lors du fonctionnement de ce système d'aide au maintien d'un véhicule dans sa voie de circulation, le couple correctif exercé sur la colonne de direction de ce véhicule peut s'opposer au couple exercé par le conducteur sur le volant de direction. Autrement formulé, ce couple correctif peut présenter un signe opposé au signe du couple exercé par le conducteur sur le volant de direction du véhicule.

L'inconvénient majeur de cette solution est que dans ce cas, la sensation du conducteur est de lutter contre le système d'aide au maintien du véhicule dans sa voie de circulation, ce qui s'avère particulièrement désagréable pour lui.

### OBJET DE L'INVENTION

Dans ce contexte, la présente invention propose un procédé d'aide à la conduite d'un véhicule automobile tel que défini en préambule comprenant en outre les étapes suivantes :
d) on détermine un couple correctif filtré en fonction dudit couple correctif, de manière que ce couple correctif filtré présente systématiquement une valeur réduite par rapport à ce couple correctif lorsque ledit couple exercé s'oppose sensiblement audit couple correctif, et lorsque ledit couple exercé s'oppose sensiblement audit couple correctif, et que ledit écart latéral est inférieur à un seuil déterminé, il est prévu d'annuler le couple correctif filtré
e) on exerce ledit couple correctif filtré sur l'organe de direction du véhicule automobile.

Cette valeur réduite peut en particulier être nulle, c'est-à-dire que ce couple correctif filtré peut en particulier être annulé lorsque ledit couple exercé s'oppose sensiblement audit couple correctif.

De cette manière, on pourra éviter au maximum que le conducteur du véhicule ait la désagréable impression de lutter contre le couple correctif.

Au cours de ce procédé, il est estimé que le couple exercé par le conducteur sur l'organe de direction du véhicule s'oppose audit couple correctif par exemple lorsque ledit couple exercé présente :
- une valeur absolue supérieure à un couple limite donné, et
- un signe opposé au signe dudit couple correctif.

Selon l'invention, dans le procédé d'aide à la conduite conforme à l'invention, il est prévu :
- à l'étape a), ladite donnée comporte un écart latéral entre le véhicule automobile et ladite trajectoire cible, et
- à l'étape d), lorsque l'écart latéral est supérieur audit seuil déterminé, le couple correctif filtré est déterminé de manière à présenter une valeur non nulle à condition que ledit écart latéral ne se réduise pas avec un taux de variation supérieur à un taux de variation limite donné, et il lui est affecté une valeur nulle sinon.

D'autres caractéristiques non limitatives et avantageuses du procédé d'aide à la conduite conforme à l'invention sont les suivantes :
- ledit taux de variation limite donné est déterminé en fonction de la valeur dudit écart latéral ;
- à l'étape d), lorsque l'écart latéral est supérieur audit seuil déterminé, le couple correctif filtré est déterminé de manière à présenter une valeur non nulle : qui est égale audit couple correctif lorsque la valeur absolue dudit couple correctif est inférieure à un couple de rappel limite, et qui présente une valeur absolue égale à audit couple de rappel limite lorsque la valeur absolue du couple correctif est supérieure ou égale à ce couple de rappel limite ;
- le couple de rappel limite est positif et est d'autant plus grand que ledit écart latéral est grand ;
- le couple de rappel limite est positif et est d'autant plus grand que ledit écart latéral augmente rapidement ;
- à l'étape d), lorsque ledit couple exercé par le conducteur et ledit couple correctif présentent le même signe, on détermine ledit couple correctif filtré de manière que : lorsque la valeur absolue dudit couple correctif est inférieure à un seuil de sécurité donné, le couple correctif filtré soit égal audit couple correctif, et que lorsque la valeur absolue du couple correctif est supérieure à ce seuil de sécurité, le couple correctif filtré présente une valeur absolue égale à ce seuil de sécurité ;
- à l'étape d), lorsque le véhicule automobile est situé du côté intérieur d'un virage de ladite voie de circulation et que la valeur absolue du couple exercé par le conducteur est supérieure à un couple limite, alors, on annule le couple correctif filtré ;
- à l'étape d), lorsque le véhicule automobile est situé du côté intérieur d'un virage de ladite voie de circulation et que la valeur absolue du couple exercé par le conducteur est supérieure à un couple limite, alors, on annule le couple correctif filtré à condition en outre que le couple correctif tende à ramener le véhicule automobile au milieu de la voie de circulation ;
- à l'étape d), le couple correctif filtré est déterminé de manière à présenter une valeur absolue restant inférieure audit seuil de sécurité donné ; et
- à l'étape d), le couple correctif filtré est déterminé de manière que son taux de variation présente une valeur absolue restant inférieure à un taux de variation maximal donné.

### DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 représente schématiquement, sous la forme d'un schéma-bloc, des opérations mises en œuvre au cours d'un procédé d'aide à la conduite d'un véhicule automobile selon l'invention ;
- la figure 2 représente schématiquement, sous la forme d'un logigramme, le détail de l'une des opérations de la figure 1 ;
- la figure 3 représente schématiquement un couple de rappel limite, en fonction d'une variable de rappel représentative notamment d'un écart latéral de ce véhicule automobile par rapport à une trajectoire cible ;
- les figures 4A et 4B représentent l'évolution au cours de temps de différentes grandeurs qui seraient acquises ou déterminées au cours du procédé illustré sur la figure 1, lorsque le conducteur présente un premier type de réaction ; et
- les figures 5A et 5B, 6A et 6B, 7A et 7B représentent respectivement, pour trois autres types de réaction du conducteur, l'évolution au cours de temps des mêmes grandeurs que sur les figures 4A et 4B.

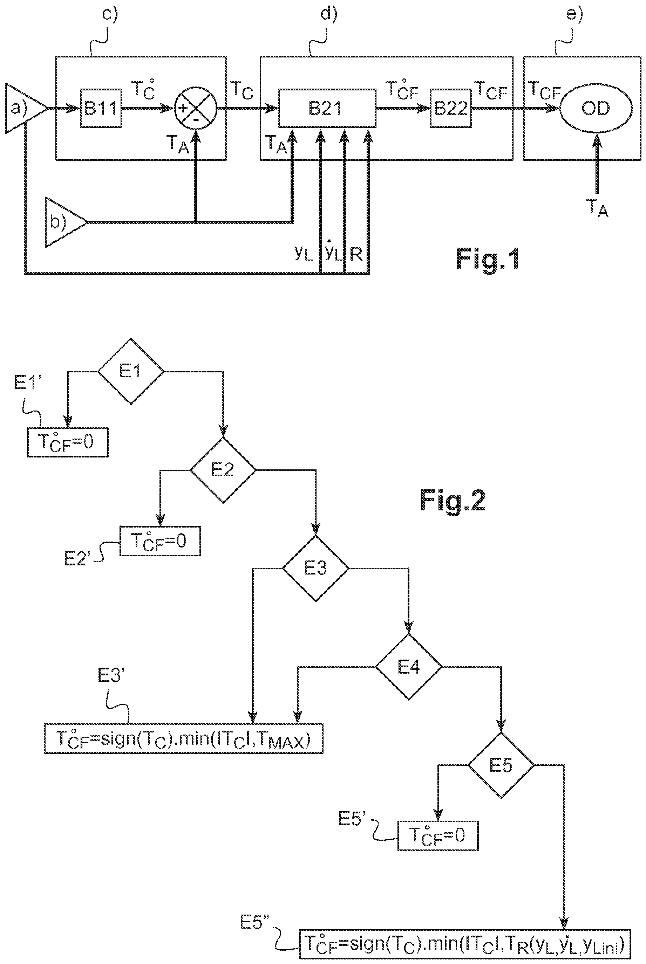

Sur la figure 1, on a représenté différentes opérations permettant de mettre en œuvre un procédé d'aide à la conduite d'un véhicule automobile.

Ce véhicule automobile comprend à cet effet des roues directrices, un organe de direction OD permettant d'agir sur les roues directrices pour modifier la direction du véhicule, et un moyen d'acquisition du couple exercé par le conducteur du véhicule automobile sur cet organe de direction OD (ce couple étant appelé dans la suite « couple exercé T_{A}»). Ce moyen d'acquisition est ici formé par un capteur de couple permettant de mesurer le couple exercé T_{A}.

L'organe de direction OD correspond ici à la colonne de direction du véhicule automobile, et le couple exercé T_{A} est exercé sur cet organe de direction OD par l'intermédiaire du volant de direction de ce véhicule.

En variante, l'organe de direction du véhicule automobile pourrait correspondre par exemple à la crémaillère de direction de ce véhicule.

Le véhicule automobile comprend en outre un actionneur, tel qu'un moteur électrique, adapté à exercer un couple correctif filtré T_{CF} sur l'organe de direction OD de ce véhicule.

Ce couple correctif filtré T_{CF} s'ajoute au couple exercé T_{A}, dont on rappelle qu'il est exercé par le conducteur sur l'organe de direction OD du véhicule automobile (figure 1).

Le véhicule automobile comprend également un capteur adapté pour acquérir au moins une donnée relative à une position de ce véhicule automobile par rapport à une voie de circulation qu'il emprunte.

Ce capteur comprend ici une caméra vidéo dont le champ de vision couvre une portion de cette voie de circulation située face au véhicule automobile. Ladite donnée relative à la position de ce véhicule automobile sur la voie de circulation est alors déterminée en fonction des images acquises par la caméra vidéo.

En variante, au lieu de comprendre une caméra vidéo, ce capteur pourrait par exemple comprendre un radar ou un lidar (selon l'acronyme anglo-saxon de « Light Détection And Ranging ») permettant de détecter des objets bordant cette voie de circulation, tels qu'une glissière de sécurité, un parapet, ou une ligne de marquage au sol. Dans ce cas, ladite donnée relative à la position de ce véhicule automobile serait issue du signal d'écho reçu par ce capteur.

Ici, la donnée relative à la position du véhicule automobile par rapport à la voie de circulation qu'il emprunte correspond plus précisément à un écart latéral yL entre le véhicule automobile et une trajectoire cible située le long de cette voie de circulation.

Cette trajectoire cible est par exemple une trajectoire suivant sensiblement le milieu de la voie de circulation qu'emprunte le véhicule automobile. Cette trajectoire cible peut toutefois s'écarter sensiblement du milieu de cette voie de circulation, en particulier au niveau de virages présentés par cette voie de circulation.

L'écart latéral yL mentionné ci-dessus correspond ici à un écart séparant le véhicule automobile et ladite trajectoire cible, à une certaine distance de visée en avant de ce véhicule, c'est-à-dire, plus précisément, que cet écart latéral yL correspond à un écart latéral séparant :
- un axe longitudinal du véhicule, qui passe sensiblement par le milieu de ce véhicule, et
- ladite trajectoire cible,
cet écart latéral yL étant évalué perpendiculairement à ladite trajectoire cible, à une certaine distance (de visée) en avant du véhicule automobile.

Ce véhicule automobile comprend également un module électronique d'analyse conçu pour déterminer cet écart latéral yL, ici par analyse de l'image acquise par la caméra vidéo du véhicule automobile. Plus particulièrement, ici, au moins l'une des deux lignes de marquage au sol repérant l'un des bords de cette voie de circulation est identifiée dans cette image, et des caractéristiques géométriques de cette ligne de marquage, telles que sa forme d'ensemble et sa position dans l'image, sont déterminées. La position du véhicule automobile par rapport à cette ligne de marquage, puis l'écart latéral yL qui sépare ce véhicule de ladite trajectoire cible sont ensuite déterminés sur la base de ces caractéristiques géométriques.

Ce module électronique d'analyse est également adapté à déterminer le couple correctif filtré T_{CF} à exercer sur l'organe de direction OD du véhicule automobile, en fonction notamment :
- dudit écart latéral yL, et
- du couple exercé T_{A}.

Ce couple correctif filtré T_{CF} peut être déterminé en outre en fonction d'un angle de braquage de l'organe de direction du véhicule.

Ce module électronique d'analyse est prévu aussi pour commander l'actionneur susmentionné de manière que cet actionneur exerce le couple correctif filtré T_{CF}, précédemment déterminé, sur l'organe de direction OD du véhicule automobile.

Le procédé d'aide à la conduite mis en œuvre par le module électronique d'analyse comprend principalement cinq étapes qui sont les suivantes :
a) on acquiert au moins une donnée relative à une position du véhicule automobile par rapport à la voie de circulation qu'il emprunte, ici l'écart latéral yL ,
b) on acquiert le couple exercé T_{A},
c) on détermine, en fonction de ladite donnée (ici l'écart latéral yL), un couple correctif T_{C} à exercer sur ledit organe de direction OD, compte tenu dudit couple exercé T_{A}, pour que le véhicule automobile suive une trajectoire cible,
d) on détermine un couple correctif filtré T_{CF} en fonction dudit couple correctif T_{C}, de manière que ce couple correctif filtré T_{CF} présente systématiquement une valeur réduite par rapport à ce couple correctif T_{C} lorsque ledit couple exercé T_{A} s'oppose sensiblement au couple correctif T_{C}, et
e) on exerce ledit couple correctif filtré T_{CF} sur l'organe de direction OD du véhicule automobile, au moyen de l'actionneur mentionné précédemment.

L'ensemble des étapes a) à e), représenté schématiquement sur la figure 1 sous la forme d'un schéma-bloc, peut maintenant être décrit plus en détail.

Ici, au cours de l'étape a), en plus d'acquérir une image d'une portion de la voie de circulation empruntée par le véhicule automobile située face à ce véhicule, on détermine, par analyse de cette image, ledit écart latéral yL, comme expliqué plus haut. Au cours de cette étape a), on détermine également, ici, un rayon de courbure R de cette portion de ladite voie de circulation.

A l'étape b), le capteur de couple permet de mesurer le couple exercé T_{A}.

L'étape c) comprend ici une première opération, correspondant au bloc B11 représenté figure 1, au cours de laquelle on détermine un couple de commande ${T}_{C}^{0}$ à exercer sur l'organe de direction OD du véhicule automobile pour que ce véhicule suive ladite trajectoire cible.

Ce couple de commande ${T}_{C}^{0}$ correspond à un couple total qu'il faudrait exercer sur cet organe de direction pour que ce véhicule suive ladite trajectoire cible.

Ce couple de commande ${T}_{C}^{0}$ est déterminé notamment en fonction de l'écart latéral yL déterminé à l'étape a) précédente, et peut être déterminé en fonction, en outre, d'un angle de braquage effectif de l'organe de direction du véhicule, et d'autres grandeurs relatives au mouvement du véhicule automobile par rapport à la voie de circulation qu'il emprunte, telles que sa vitesse de déplacement par rapport à cette voie de circulation, ou sa vitesse de lacet r (la vitesse de lacet du véhicule est définie comme sa vitesse de rotation autour d'un axe perpendiculaire à un plan moyen de la route sur laquelle est situé le véhicule, et peut être mesurée par exemple au moyen d'un gyromètre).

Ici, par exemple, la détermination du couple de commande ${T}_{C}^{0}$ comprend tout d'abord le calcul d'un angle de braquage souhaité AGS pour l'organe de direction du véhicule automobile, en fonction de l'écart latéral yL et de la vitesse de lacet r de ce véhicule, au moyen d'un correcteur proportionnel, c'est-à-dire conformément à la formule (F1) suivante : $AGS = fct 1 . yL + fct 2 . r$ (F1) où fct1 et fct2 sont deux constantes multiplicatives.

Le couple de commande ${T}_{C}^{0}$ est obtenu ensuite en appliquant une correction de type PID (selon l'acronyme de Proportionnelle, Intégrale et Dérivée) à une différence entre cet angle de braquage souhaité AGS et de l'angle de braquage effectif de cet organe de direction.

Comme ce couple de commande ${T}_{C}^{0}$ correspond à couple total, et que le conducteur peut exercer déjà un couple exercé T_{A} non nul sur l'organe de direction OD du véhicule, on calcule ensuite, au cours de cette étape c), un couple correctif T_{C} à exercer (au moyen dudit actionneur), pour que le véhicule automobile suive ladite trajectoire cible, en tenant compte du couple exercé T_{A}. Plus précisément, ici, le couple correctif T_{C} calculé pour être égal à la différence entre le couple de commande ${T}_{C}^{0}$ et le couple exercé T_{A} (comme on peut le voir figure 1) : ${T}_{C} = {T}_{C}^{0} - {T}_{A}$ (F2)

Au cours de l'étape d) suivante, on détermine le couple correctif filtré T_{CF} qui sera finalement appliqué sur l'organe de direction OD du véhicule, en fonction de ce couple correctif T_{C}, de manière à limiter ou à annuler la valeur de ce couple correctif filtré T_{CF} lorsqu'il est susceptible d'être ressenti par le conducteur du véhicule comme s'opposant au couple qu'il exerce sur le volant.

Cette étape d), qui fait plus précisément l'objet de la présente invention, comprend une première opération, correspondant au bloc B21 représenté figure 1.

Au cours de cette première opération, qui sera décrite en détail plus bas en référence à la figure 2, on détermine, à partir du couple correctif T_{C}, un couple correctif filtré de base ${T}_{CF}^{0} ,$ en tenant compte notamment du couple exercé T_{A}.

Le couple correctif filtré de base ${T}_{CF}^{0}$ est déterminé notamment de manière à éviter que le couple correctif filtré T_{CF} exercé finalement sur l'organe de direction du véhicule ne s'oppose au couple exercé T_{A} par le conducteur sur cet organe de direction, en particulier dans des situations dans lesquelles la correction apportée par ce couple correctif filtré T_{CF} ne serait pas indispensable pour que le véhicule automobile suive, ou du moins soit proche de ladite trajectoire cible.

L'étape d) comprend également une deuxième opération, optionnelle, correspondant au bloc B22 représenté sur la figure 1, qui suit ladite première opération.

Au cours de cette deuxième opération, on détermine le couple correctif filtré T_{CF}, en filtrant le couple correctif filtré de base ${T}_{CF}^{0}$ déterminé précédemment, de manière à assurer que le couple correctif filtré T_{CF} présente un taux de variation dont la valeur absolue reste inférieure à un taux de variation maximal txmax donné.

La première opération de l'étape d) comprend principalement cinq sous-étapes E1 à E5, représentées schématiquement figure 2.

On notera au préalable la dérivée *d* yL /*d*t de l'écart latéral yL par rapport au temps t « vitesse latérale ẏL ».

Au cours de la première de ces sous-étapes (sous-étape E1), on teste si :
- le véhicule automobile s'écarte de ladite trajectoire cible, et si
- le couple correctif T_{C} aurait tendance à augmenter la valeur absolue |ẏL| de la vitesse latérale ẏL s'il était exercé sur l'organe de direction du véhicule.

Lorsque les deux conditions ci-dessus sont réunies, on annule le couple correctif filtré de base ${T}_{CF}^{0}$ (sous-étape E1'). Cela a pour effet d'annuler également le couple correctif filtré T_{CF} exercé sur l'organe de direction du véhicule automobile.

Dans le cas contraire, ce procédé se poursuit par la sous-étape E2 suivante.

Ici, plus précisément, au cours de cette sous-étape E1, pour tester si les deux conditions décrites ci-dessus sont vérifiées, on calcule ici la valeur de la variable booléenne VB1 suivante : $\left(\left|{yL}^{.}\right|>ε\right) & \left(sign\left({T}_{C}\right)=sign\left(yLini\right)\right)$ *ε* étant un seuil de vitesse latérale donné au-delà duquel on considère ici que le véhicule s'écarte (rapidement) de ladite trajectoire cible.

La grandeur yLini correspond quant à elle à l'écart latéral du véhicule automobile par rapport à ladite trajectoire cible à un instant pour lequel on déclenche l'assistance à la conduite, c'est-à-dire à un instant à partir duquel le couple correctif filtré commence à être exercé sur l'organe de direction du véhicule. Cette assistance à la conduite peut être déclenchée (par le module électronique d'analyse) par exemple du fait que le véhicule automobile s'est écarté nettement de ladite trajectoire cible.

On considère ici que les deux conditions mentionnées ci-dessus sont vérifiées lorsque la valeur de cette variable booléenne VB1 est la valeur VRAI.

Cette première sous-étape E1 assure principalement une fonction de sécurité. En effet, à l'étape b), le couple correctif T_{C} est déterminé de manière à ramener le véhicule automobile le long de ladite trajectoire cible, ou à le maintenir le long de celle-ci, et non de manière à écarter le véhicule automobile de cette trajectoire cible. C'est donc essentiellement en cas d'erreur lors de l'exécution de l'étape b) que cette sous-étape E1 conduirait à annuler le couple correctif filtré de base ${T}_{CF}^{0}$ (et en conséquence le couple correctif filtré T_{CF}).

Au cours de la sous-étape E2 suivante, optionnelle, on teste si :
- le véhicule automobile est situé du côté intérieur d'un virage de ladite voie de circulation, si
- la valeur absolue |T_{A}| du couple exercé par le conducteur est supérieure à un couple limite T_{ACT} donné, et si
- le couple correctif T_{C} aurait tendance (s'il était exercé sur l'organe de direction du véhicule) à diriger le véhicule automobile vers le milieu de ladite voie de circulation.

Le fait que la valeur absolue |T_{A}| du couple exercé par le conducteur soit supérieure à ce couple limite T_{ACT} indique que le conducteur du véhicule agit sur le volant de direction de ce véhicule, c'est-à-dire exerce effectivement un couple sensible (non négligeable) sur celui-ci.

Lorsque ces trois conditions sont réunies, on annule le couple correctif filtré de base ${T}_{CF}^{0}$ (sous-étape E2'). On rappelle que cela a pour effet d'annuler également le couple correctif filtré T_{CF} exercé sur l'organe de direction du véhicule automobile.

Dans le cas contraire, ce procédé se poursuit par la sous-étape E3 suivante.

Ici, plus précisément, au cours de cette sous-étape E2, pour tester si les trois conditions décrites ci-dessus sont vérifiées, on calcule la valeur de la variable booléenne VB2 suivante : $\left(sign\left(yLini\right)=sign\left(R\right)\right) & \left(\left|{T}_{C}\right|\geq {T}_{ACT}\right) & \left(sign\left({T}_{C}\right)=sign\left(R\right)\right)$ où R est le rayon de courbure d'une portion de la voie de circulation empruntée par le véhicule automobile située face à ce véhicule, dont on rappelle qu'il a été déterminé à l'étape a) précédente.

On considère ici que les trois conditions à tester à la sous-étape E2 sont vérifiées lorsque la valeur de cette variable booléenne VB2 est la valeur VRAI.

Annuler ainsi le couple correctif filtré lorsque ces trois conditions sont vérifiées permet au conducteur du véhicule automobile de diriger plus facilement ce véhicule le long d'une trajectoire passant du côté intérieur de ce virage (en coupant le virage), c'est-à-dire de diriger ce véhicule le long de cette trajectoire sans avoir à s'opposer ou à lutter contre le couple correctif filtré que pourrait exercer l'actionneur sur l'organe de direction OD de ce véhicule.

En variante, lors de cette sous-étape E2, le couple correctif filtré de base ${T}_{CF}^{0}$ pourrait être annulé dès que les deux premières de ces trois conditions seraient vérifiées.

Au cours de la sous-étape E3 suivante, on teste si le conducteur du véhicule automobile agit effectivement sur le volant de direction de ce véhicule, c'est-à-dire s'il exerce effectivement un couple (non négligeable) sur celui-ci.

Pour cela, on teste ici si la valeur absolue |T_{A}| dudit couple exercé est supérieure audit couple limite T_{ACT}, ou si elle est inférieure à ce couple limite.

Lorsqu'il est déterminé ainsi que le conducteur du véhicule automobile agit effectivement sur le volant de direction de ce véhicule, ce procédé se poursuit par la sous-étape E4 suivante.

Lorsqu'il est déterminé au contraire que ce conducteur n'agit pas, ou agit peu sur ce volant de direction, ce procédé se poursuit par la sous-étape E3', au cours de laquelle on détermine le couple correctif filtré de base ${T}_{CF}^{0}$ comme suit :
- lorsque la valeur absolue |T_{C}| dudit couple correctif est inférieure à un seuil de sécurité T_{MAX} donné, le couple correctif filtré de base ${T}_{CF}^{0}$ est égal audit couple correctif T_{C}, et
- lorsque la valeur absolue |T_{C}| du couple correctif est supérieure à ce seuil de sécurité T_{MAX}, le couple correctif filtré de base ${T}_{CF}^{0}$ présente une valeur absolue égale à ce seuil de sécurité T_{MAX}.

Plus précisément, lorsque le conducteur du véhicule automobile n'agit pas, ou agit peu sur le volant de direction de ce véhicule, le couple correctif filtré de base ${T}_{CF}^{0}$ est déterminé conformément à la formule (F3) suivante : ${T}_{CF}^{0} = sign \left({T}_{C}\right) . min \left(\left|{T}_{C}\right|, {T}_{MAX}\right)$ (F3)

Ainsi, lorsque le conducteur de ce véhicule automobile n'agit pas, ou agit peu sur le volant de direction de ce véhicule, le couple correctif filtré ${T}_{CF}^{0}$ est égal au couple correctif T_{C} à exercer sur ledit organe de direction pour que le véhicule automobile suive ladite trajectoire cible, sauf lorsque ce couple correctif présente une valeur absolue supérieure au seuil de sécurité T_{MAX}.

Cette disposition permet d'assurer que le véhicule automobile suive ladite trajectoire cible, ou du moins une trajectoire proche de cette trajectoire cible, sans intervention de son conducteur, ou avec une intervention réduite de ce dernier. Dans ces conditions, on considère en effet qu'appliquer un couple sur l'organe de direction présentant un sens opposé au couple exercé par le conducteur ne gêne pas ce dernier.

Par ailleurs, limiter ainsi la valeur absolue du couple correctif filtré ${T}_{CF}^{0}$ permet d'assurer que la valeur absolue du couple correctif filtré T_{CF} finalement exercée sur l'organe de direction OD de ce véhicule reste inférieure au seuil de sécurité T_{MAX}, ce qui contribue à une conduite souple de ce véhicule automobile, c'est-à-dire à une conduite selon laquelle la direction de ce véhicule est commandée de manière progressive, sans à-coups violents.

Limiter ainsi la valeur absolue du couple correctif filtré T_{CF} pour qu'elle reste inférieure au seuil de sécurité T_{MAX} permet en outre, ici, d'assurer que le conducteur du véhicule automobile est en mesure, s'il le souhaite, de s'opposer complètement à ce couple correctif filtré T_{CF} (exercé sur l'organe de direction du véhicule). Plus précisément, ici, la valeur de ce seuil de sécurité T_{MAX} est choisie de manière que le conducteur du véhicule automobile soit en mesure d'exercer, sur l'organe de direction du véhicule, un couple exercé T_{A} supérieur à ce seuil de sécurité T_{MAX}.

Cela laisse ainsi la possibilité au conducteur, s'il le souhaite, d'écarter volontairement le véhicule automobile de ladite trajectoire cible, ce qui est intéressant en termes de sécurité. En effet, il pourrait s'avérer nécessaire, par exemple pour éviter un obstacle surgissant de manière imprévue face au véhicule automobile, que le conducteur du véhicule automobile écarte ce véhicule de ladite trajectoire cible.

Au cours de la sous-étape E4 suivante, on teste si le couple exercé T_{A} (appliqué par le conducteur) s'oppose au couple correctif T_{C}, en comparant les signes que présentent ces deux couples.

Ici, le couple exercé T_{A} et le couple correctif T_{C} présentent des signes opposés lorsqu'ils s'opposent l'un à l'autre, c'est-à-dire lorsqu'ils correspondent à des actions mécaniques exercées en sens opposés sur l'organe de direction OD du véhicule.

Lorsque le couple exercé T_{A} s'oppose au couple correctif T_{C}, ce procédé se poursuit par la sous-étape E5 suivante.

Lorsqu'au contraire le couple exercé T_{A} présente le même signe que le couple correctif T_{C}, ce procédé se poursuit par la sous-étape E3' décrite précédemment.

Au cours de la sous-étape E5 suivante, on teste si l'écart latéral yL entre le véhicule automobile et ladite trajectoire cible présente une valeur absolue supérieure à un seuil déterminé yLS.

Le fait que la valeur absolue de cet écart latéral yL soit inférieure au seuil déterminé yLS indique que le véhicule automobile est proche de ladite trajectoire cible.

Lorsque l'écart latéral yL entre le véhicule automobile et ladite trajectoire cible présente une valeur absolue inférieure à ce seuil déterminé yLS, le procédé se poursuit par la sous-étape E5', au cours de laquelle on annule le couple correctif filtré de base ${T}_{CF}^{0} .$ On rappelle que cela a pour effet d'annuler également le couple correctif filtré T_{CF} exercé sur l'organe de direction OD du véhicule automobile. En annulant ainsi le couple correctif filtré T_{CF}, on évite avantageusement que ce couple correctif filtré T_{CF} ne s'oppose au couple exercé T_{A} par le conducteur, et cela dans une situation pour laquelle la correction apportée par ce couple correctif filtré T_{CF} ne serait que peu utile, puisque le véhicule automobile est déjà proche de ladite trajectoire cible.

Lorsque l'écart latéral yL entre le véhicule automobile et ladite trajectoire cible présente au contraire une valeur absolue supérieure à ce seuil déterminé yLS, le procédé se poursuit par la sous-étape E5", au cours de laquelle le couple correctif filtré de base ${T}_{CF}^{0}$ est déterminé de manière à ce qu'il présente une valeur pouvant être non nulle.

Plus précisément, au cours de la sous-étape E5", on détermine le couple correctif filtré de base ${T}_{CF}^{0}$ de manière qu'il présente une valeur non nulle lorsque l'écart latéral yL, en plus d'être supérieur audit seuil déterminé yLS, ne se réduit pas avec un taux de variation qui soit supérieur à un taux de variation limite donné. Le couple correctif filtré T_{CF} qui sera finalement exercé sur l'organe de direction OD de ce véhicule automobile présentera alors également une valeur non nulle. Ce taux de variation limite donné est déterminé ici en fonction de l'écart latéral yL. Il est d'autant plus grand que l'écart latéral est grand.

Ainsi, on autorise le couple correctif filtré T_{CF} à s'opposer au couple exercé T_{A} par le conducteur du véhicule automobile, lorsque le véhicule automobile s'est écarté nettement de ladite trajectoire cible, et qu'en outre il ne tend pas à revenir rapidement vers cette trajectoire cible.

Cette disposition est intéressante, car, dans une telle situation, même si cela peut éventuellement être ressenti comme une gêne par le conducteur du véhicule automobile, il est particulièrement utile, voir nécessaire pour éviter une sortie de route du véhicule automobile, d'exercer sur l'organe de direction OD de ce véhicule un couple correctif filtré T_{CF} proche dudit couple correctif T_{C}.

En revanche, lorsque cet écart latéral yL se réduit rapidement, c'est à dire ici, plus précisément, lorsque cet écart latéral se réduit avec un taux de variation supérieur audit taux de variation limite donné, alors, on annule le couple correctif filtré de base ${T}_{CF}^{0}$ et donc aussi le couple correctif filtré T_{CF}.

Il est intéressant d'annuler de la sorte le couple correctif filtré T_{CF}, lorsque cet écart latéral yL se réduit rapidement, car on évite ainsi que ce couple correctif filtré T_{CF} ne s'oppose au couple exercé T_{A} par le conducteur, dans une situation pour laquelle la correction apportée par ce couple correctif filtré T_{CF} ne serait que peu utile, puisque le véhicule automobile se rapproche rapidement de ladite trajectoire cible.

Ici, on considère que cet écart latéral yL se réduit rapidement, c'est-à-dire avec un taux de variation supérieur à un taux de variation limite donné, lorsque la variable de rappel EL définie comme suit : EL = *sign*(yLini) . (K.yL + C.ẏL), où K et C sont une première et une deuxième constantes positives, est négative.

Lorsque cette variable de rappel EL est positive, on considère ici que l'écart latéral yL entre le véhicule automobile et ladite trajectoire cible ne diminue pas rapidement, c'est-à-dire plus précisément qu'il ne se réduit pas avec un taux de variation qui soit supérieur au taux de variation limite donné mentionné ci-dessus.

Pour illustrer la manière dont varie le signe de cette variable de rappel EL, considérons à titre d'exemple une situation dans laquelle l'écart latéral initial yLini est positif, et dans laquelle l'écart latéral yL est également positif.

Dans cette situation, lorsque la vitesse latérale ẏL est positive, le véhicule automobile, qui s'était déjà écarté de ladite trajectoire cible, s'en écarte encore plus. Dans ce cas, la variable de rappel EL est positive.

Dans cette même situation, lorsque la vitesse latérale ẏL est négative, le véhicule automobile se rapproche de cette trajectoire cible, si bien que l'écart latéral yL diminue au cours du temps (plus généralement, la valeur absolue de l'écart latéral diminue au cours du temps). Si cette vitesse latérale ẏL est non seulement négative, mais en outre présente une valeur absolue supérieure à la quantité $\frac{K}{C} \left|yL\right| ,$ on considère que cet écart latéral diminue rapidement, avec un taux de variation (|ẏL|) supérieur à un taux de variation limite donné (ici égal à $\frac{K}{C} \left|yL\right|$). On remarque que dans ce cas, la variable de rappel EL est négative.

Dans cette même situation, lorsque la vitesse latérale ẏL est négative, mais présente une valeur absolue inférieure à la quantité $\frac{K}{C} \left|yL\right| ,$ on considère que l'écart latéral diminue, mais lentement. On remarque que dans ce cas, la variable de rappel EL est positive.

Pour résumer, ici, au cours de la sous-étape E5" :
- lorsque la variable de rappel EL est négative, on annule le couple correctif filtré de base ${T}_{CF}^{0}$ (on rappelle que cela a alors pour conséquence d'annuler le couple correctif filtré T_{CF} qui sera finalement exercé sur l'organe de direction OD de ce véhicule automobile) et
- lorsque la variable de rappel EL est positive, on détermine le couple correctif filtré de base ${T}_{CF}^{0}$ de manière qu'il présente une valeur non nulle.

Ici, lorsque l'écart latéral yL est non seulement supérieur au seuil déterminé yLS, mais en outre ne se réduit pas rapidement (EL>0), ladite valeur non nulle du couple correctif filtré de base ${T}_{CF}^{0}$ est déterminée de manière :
- à être égale au couple correctif T_{C} lorsque la valeur absolue dudit couple correctif T_{C} est inférieure à un couple de rappel limite T_{R}, et
- à présenter une valeur absolue $\left|{T}_{CF}^{0}\right|$ égale audit couple de rappel limite T_{R} lorsque la valeur absolue du couple correctif T_{C} est supérieure ou égale à ce couple de rappel limite T_{R}.

Ici, ce couple de rappel limite T_{R} est positif, et d'autant plus grand que l'écart latéral yL est grand. Ce couple de rappel limite T_{R} est en outre d'autant plus grand que cet écart latéral yL augmente rapidement.

Ainsi, lorsque l'écart latéral yL est supérieur au seuil déterminé yLS, et ne se réduit pas rapidement (EL>0), on autorise le couple correctif filtré T_{CF} à s'opposer au couple exercé T_{A} par le conducteur du véhicule automobile, et cela d'autant plus que ce véhicule automobile est éloigné de ladite trajectoire cible, ou qu'il s'en éloigne rapidement.

Cette dernière disposition permet, dans une telle situation, de trouver un compromis optimum entre l'agrément de conduite pour le conducteur du véhicule automobile, et la nécessité, d'autant plus forte que ce véhicule est éloigné de ladite trajectoire cible (ou qu'il s'en éloigne rapidement), de le ramener vers ladite trajectoire cible.

Ici, plus précisément, le couple de rappel limite T_{R} est d'autant plus grand que la variable de rappel EL est grande.

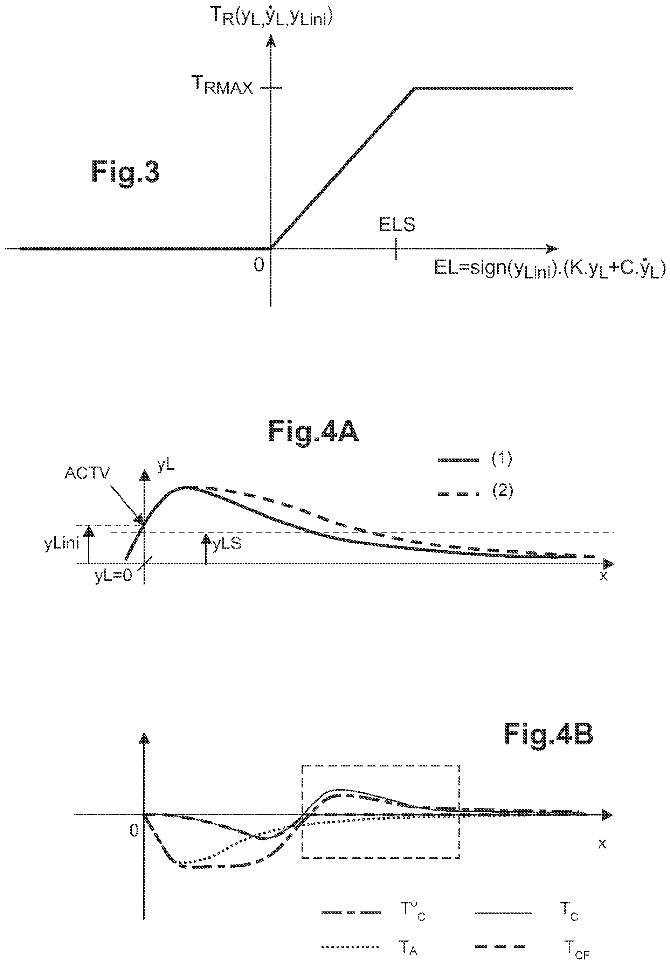

Ici, par exemple, le couple de rappel limite est déterminé, en fonction de cette variable de rappel EL, conformément à la figure 3. Sur cette figure, on a représenté schématiquement le couple de rappel limite T_{R}, portée en ordonnée, en fonction de la variable de rappel EL, portée en abscisse.

Comme on peut le voir, lorsque la variable de rappel EL est négative, le couple de rappel limite T_{R} est ici égal à 0.

Lorsque la variable de rappel EL est positive, et inférieure à une valeur limite ELS, le couple de rappel limite T_{R} augmente proportionnellement à cette variable de rappel EL, jusqu'à atteindre, lorsque la variable de rappel EL est égale à cette valeur limite ELS, un couple de rappel maximal T_{RMAX}.

En variante, au lieu de croitre linéairement avec la variable de rappel EL, le couple de rappel limite T_{R} pourrait augmenter par exemple quadratiquement avec la variable de rappel EL jusqu'au couple de rappel maximal T_{RMAX}, ou encore croitre avec la variable de rappel EL d'une manière continue quelconque, jusqu'au couple de rappel maximal T_{RMAX}.

Lorsque la variable de rappel EL est supérieure à cette valeur limite ELS, le couple de rappel limite T_{R} reste égal à ce couple de rappel maximal T_{RMAX}.

La valeur du couple de rappel limite T_{R} est limitée à la valeur de ce couple de rappel maximal T_{RMAX} pour limiter la valeur du couple correctif filtré de base ${T}_{CF}^{0} ,$ et, en conséquence, du couple correctif filtré T_{CF}, à des fins de sécurité, de manière comparable à la limitation du couple correctif filtré de base ${T}_{CF}^{0}$ réalisée lors de la sous-étape E3' qui a été décrite précédemment.

Ici, plus particulièrement, ce couple de rappel maximal T_{RMAX} est égal au seuil de sécurité T_{MAX} utilisé lors de cette sous-étape E3'.

En variante, le couple de rappel maximal T_{RMAX} pourrait présenter une valeur différente de celle du seuil de sécurité T_{MAX} utilisé lors de la sous-étape E3', inférieure à ce seuil de sécurité T_{MAX}.

Comme le couple de rappel limite T_{R} est ici nul lorsque la variable de rappel EL est négative, l'ensemble des dispositions mises en œuvre à l'étape E5" et décrites ci-dessus peut être implémenté en calculant le couple correctif filtré de base ${T}_{CF}^{0} ,$ au cours de la sous-étape E5", conformément à la formule (F4) suivante : ${T}_{CF}^{0} = sign \left({T}_{C}\right) . min \left(\left|{T}_{C}\right|,{T}_{R}\left(yL,{y}^{.}L,yLini\right)\right)$ (F4)

Le couple correctif filtré de base ${T}_{CF}^{0}$ déterminé au cours de la première opération de l'étape d) qui a été décrite ci-dessus est ensuite filtré, comme mentionné précédemment, lors de la deuxième opération (bloc B22) que comprend ici l'étape d).

Au cours de cette deuxième opération, on détermine le couple correctif filtré T_{CF}, en filtrant le couple correctif filtré de base ${T}_{CF}^{0}$ déterminé précédemment, comme cela est expliqué ci-dessous.

Tant que la valeur absolue $\left|\frac{d { T}_{CF}^{o}}{d t}\right|$ du taux de variation du couple correctif filtré de base ${T}_{CF}^{0}$ reste inférieure au taux de variation maximal txmax, le couple correctif filtré T_{CF} est égal au couple correctif filtré de base ${T}_{CF}^{0} .$

Si la valeur absolue $\left|\frac{d { T}_{CF}^{o}}{d t}\right|$ du taux de variation du couple correctif filtré de base devient supérieure à ce taux de variation maximal txmax, le couple correctif filtré T_{CF} est alors déterminé pour tendre au plus vite vers le couple correctif filtré de base ${T}_{CF}^{0} ,$ mais tout présentant un taux de variation $\frac{d {T}_{CF}}{d t}$ dont la valeur absolue reste inférieure à ce taux de variation maximal txmax, c'est-à-dire en présentant un taux de variation $\frac{d {T}_{CF}}{d t}$ égal au taux de variation maximal txmax lorsque le taux de variation $\frac{d { T}_{CF}^{o}}{d t}$ du couple correctif filtre de base est positif, et égal à l'opposé -txmax du taux de variation maximal txmax lorsque le taux de variation $\frac{d { T}_{CF}^{o}}{d t}$ du couple correctif filtre de base est négatif.

Cette deuxième opération (bloc B22) de l'étape d) assure que le couple correctif filtré T_{CF} finalement exercé sur l'organe de direction OD du véhicule automobile évolue de manière progressive au cours du temps, sans variation brutale, ce qui est plus agréable pour le conducteur de ce véhicule.

En variante, au cours de cette deuxième opération, le couple correctif filtré T_{CF} peut en outre être déterminé de manière à présenter une valeur absolue restant inférieure à un autre seuil de sécurité donné. Dans le cadre de cette variante, il est possible de s'affranchir des seuils de sécurité introduits respectivement aux sous-étapes E3' et E5" (en l'occurrence le seuil de sécurité T_{MAX} et le couple de rappel maximal T_{RMAX}), le rôle de ces seuils de sécurité étant alors rempli lors de la deuxième opération de l'étape d).

Le procédé d'aide à la conduite décrit ci-dessus permet de corriger automatiquement la trajectoire suivie par le véhicule automobile, pour qu'elle suive ladite trajectoire cible. Ce procédé permet de plus de concilier cette correction automatique avec des actions exercées par le conducteur de ce véhicule sur son volant de direction, d'une manière harmonieuse, agréable pour ce conducteur, et sécurisée.

La manière dont est estompée (voir annulée) cette correction automatique, lorsqu'elle s'oppose aux actions exercées par le conducteur de ce véhicule sur son volant de direction peut être ajustée par le réglage des différents seuils, constantes, et grandeurs limites ou maximales intervenant lors de l'exécution de ce procédé d'aide à la conduite.

Par exemple, en réglant la deuxième constante C à une valeur élevée, on obtient que cette correction automatique soit annulée lorsqu'elle s'oppose au couple T_{A} exercé par le conducteur, et que l'écart latéral yL du véhicule automobile par rapport à la trajectoire cible se réduit, et cela même si cet écart latéral yL se réduit lentement.

le couple correctif filtré T_{CF} est autorisé à s'opposer au couple exercé T_{A} par le conducteur d'autant plus fortement que les valeurs des premières et deuxième constantes K et C sont élevées.

Plusieurs situations différentes, dans lesquelles le couple correctif T_{C} s'oppose au couple exercé T_{A} par le conducteur du véhicule automobile, et dans lesquelles le couple correctif filtré T_{CF} est soit annulé, soit déterminé de manière à présenter une valeur non nulle, sont illustrées sur les figures 4A à 7B.

Sur ces figures, on a représenté, à titre d'illustration, différentes grandeurs qui seraient acquises ou déterminées au cours du procédé d'aide à la conduite décrit ci-dessus, pour un exemple de trajet du véhicule automobile. Les quatre couples de figures 4A et 4B, 5A et 5B, 6A et 6B, et 7A et 7B correspondent chacun à un type différent de réaction du conducteur de ce véhicule.

Cet exemple de trajet du véhicule automobile correspond à un trajet sur une voie de circulation en ligne droite. Ladite trajectoire cible correspond ici au milieu de cette voie de circulation, et est donc rectiligne.

Le véhicule automobile est repéré le long de cette voie de circulation par une position longitudinale x, correspondant à la position de ce véhicule le long d'un axe longitudinal parallèle à cette trajectoire cible.

On rappelle que lorsque le véhicule automobile suit ladite trajectoire cible, l'écart latéral yL est nul (yL=0).

Sur les figures 4A, 5A, 6A et 7A, la courbe (1) en trait plein représente l'écart latéral yL du véhicule automobile, porté en ordonnée, en fonction de la position longitudinale x de ce véhicule, portée en abscisse, lorsque le couple exercé T_{A} (appliqué par le conducteur) est nul. Dans ce cas, le couple exercé par l'actionneur susmentionné sur l'organe de direction OD de ce véhicule correspond alors directement à la commande en couple ${T}_{C}^{0} .$

Pour l'ensemble des figures 4A à 7B, le véhicule automobile s'écarte initialement de la trajectoire cible. Ainsi, comme on peut le voir sur chacune des figures 4A, 5A, 6A et 7A, l'écart latéral yL commence par augmenter.

En réaction au fait que le véhicule automobile se soit écarté de cette trajectoire cible, on déclenche l'assistance à la conduite, c'est-à-dire que l'actionneur commence à exercer un couple sur l'organe de direction du véhicule pour ramener ce dernier au voisinage de la trajectoire cible. Ce déclenchement est repéré par l'indication ACTV sur les figures 4A, 5A, 6A et 7A.

Comme on peut le constater sur les figures 4A, 5A, 6A et 7A, après ce déclenchement, le véhicule automobile se rapproche effectivement de ladite trajectoire cible jusqu'à se trouver à proximité de celle-ci.

Sur les figures 4A, 5A, 6A et 7A, les courbes (2), (2'), (2") et (2'''), en tirets, représentent chacune l'écart latéral yL du véhicule automobile, en fonction de la position longitudinale x de ce véhicule, si seul le conducteur du véhicule automobile agissait sur l'organe de direction OD de ce véhicule, c'est-à-dire si l'actionneur susmentionné n'agissait pas sur cet organe de direction.

La figure 4A correspond à un cas dans lequel le conducteur du véhicule automobile, lorsqu'il agit seul sur l'organe de direction OD du véhicule, tend à ramener ce véhicule vers la trajectoire cible, et cela plus lentement que lorsque la direction du véhicule est commandée entièrement automatiquement, c'est-à-dire plus lentement que lorsque seul l'actionneur mentionné précédemment, commandé conformément au procédé décrit ci-dessus, agit sur cet organe de direction.

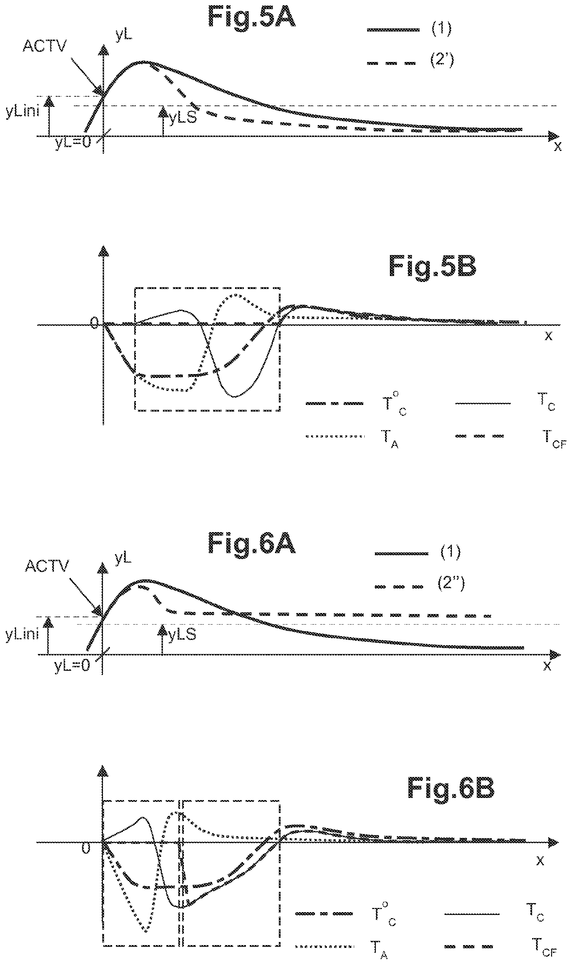

La figure 5A correspond à un cas dans lequel le conducteur du véhicule automobile, lorsqu'il agit seul sur l'organe de direction OD du véhicule, tend à ramener ce véhicule vers la trajectoire cible, et cela plus rapidement que lorsque la direction du véhicule est commandée entièrement automatiquement, c'est-à-dire plus rapidement lorsque seul l'actionneur mentionné précédemment, commandé conformément au procédé décrit ci-dessus, agit sur cet organe de direction.

La figure 6A correspond à un cas dans lequel le conducteur du véhicule automobile, lorsqu'il agit seul sur l'organe de direction OD du véhicule, suite à l'écart initial du véhicule automobile, corrige la direction de déplacement de ce véhicule pour que ce dernier cesse de s'éloigner de la trajectoire cible, mais sans pour autant ramener ce véhicule au voisinage de cette trajectoire cible. Autrement formulé, suite à cet écart, le conducteur du véhicule stabilise l'écart latéral yL du véhicule par rapport à ladite trajectoire cible à une valeur non nulle, ici supérieure à la valeur du seuil déterminé yLS.

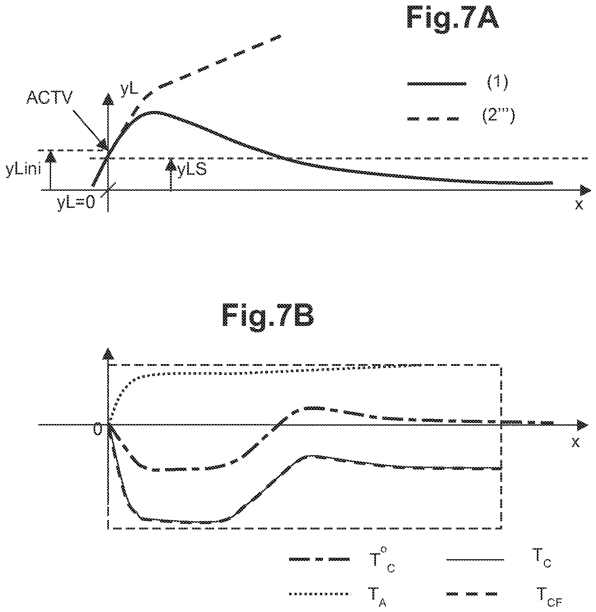

La figure 7A correspond à un cas dans lequel le conducteur du véhicule automobile, lorsqu'il agit seul sur l'organe de direction OD du véhicule, dirige ce dernier hors de la voie de circulation empruntée par ce véhicule.

Sur chacune des figures 4B, 5B, 6B et 7B, on a représenté en tirets longs, en fonction de la position longitudinale x du véhicule automobile, la commande en couple ${T}_{C}^{0} ,$ qui est exercée directement sur l'organe de direction OD du véhicule automobile par l'actionneur susmentionné lorsque le conducteur n'agit pas sur cet organe de direction (c'est-à-dire lorsque le couple exercé T_{A} est nul), et sous l'effet duquel ce véhicule suit la trajectoire correspondant à la courbe (1) des figures 4A, 5A, 6A et 7A.

Sur les figures 4B, 5B, 6B et 7B, on a représenté également, en pointillés et en fonction de la position longitudinale x du véhicule, le couple exercé T_{A} appliqué par le conducteur du véhicule automobile lorsqu'il agit seul sur l'organe de direction OD de ce véhicule, pour que ce véhicule suive une trajectoire correspondant respectivement à la courbe (2) de la figure 4A, à la courbe (2') de la figure 5A, à la courbe (2") de la figure 6A, et à la courbe (2''') de la figure 7A.

On a également représenté sur chacune des figures 4B, 5B, 6B et 7B, en trait plein et encore en fonction de la position longitudinale x du véhicule, le couple correctif T_{C} dans un cas pour lequel à la fois le conducteur et l'assistance à la conduite sont actifs. On rappelle que ce couple correctif T_{C} est égal à la différence entre la commande en couple ${T}_{C}^{0}$ (tracée en tirets longs) et le couple exercé T_{A} (tracé en pointillés), en l'occurrence ici le couple exercé par le conducteur dans le but que le véhicule automobile suive une trajectoire correspondant respectivement aux courbes (2), (2'), (2") et (2''') des figures 4A, 5A, 6A et 7A.

Le couple correctif filtré T_{CF}, calculé à partir de ce couple correctif T_{C}, est également tracé, en tirets courts, en fonction de la position longitudinale x du véhicule automobile, sur chacune des figures 4B, 5B, 6B et 7B.

On constate, pour les quatre types de réaction du conducteur du véhicule automobile correspondant respectivement aux couples de figures 4A et 4B, 5A et 5B, 6A et 6B, et 7A et 7B, que le couple correctif T_{C} est amené, par moment, à s'opposer au couple exercé T_{A}. Les situations dans lesquelles le couple correctif T_{C} s'oppose au couple exercé T_{A} sont repérées sur les figures 4B, 5B, 6B et 7B par un rectangle tracé en tirets.

Dans le cas de la figure 4B, la situation dans laquelle le couple correctif T_{C} s'oppose au couple exercé T_{A} appliqué par le conducteur est une situation dans laquelle le véhicule automobile est proche de la trajectoire cible, c'est-à-dire, ici, une situation dans laquelle l'écart latéral yL du véhicule est inférieur au seuil déterminé yLS. Conformément au procédé qui a été décrit précédemment, le couple correctif filtré T_{CF} est alors annulé, comme on le constate sur cette figure.

Dans le cas de la figure 5B, la situation dans laquelle le couple correctif T_{C} s'oppose au couple exercé T_{A} par le conducteur est une situation dans laquelle le véhicule automobile est éloigné de la trajectoire cible (c'est-à-dire, ici, une situation dans laquelle l'écart latéral yL du véhicule est supérieur au seuil déterminé yLS), mais dans laquelle cet écart latéral yL se réduit rapidement. Conformément au procédé qui a été décrit précédemment, le couple correctif filtré T_{CF} est alors annulé, comme on le constate sur cette figure.

Dans le cas de la figure 6B, on distingue deux situations successives dans lesquelles le couple correctif T_{C} s'oppose au couple exercé T_{A} par le conducteur. Dans la première de ces deux situations, l'écart latéral yL du véhicule automobile par rapport à la trajectoire cible est supérieur au seuil déterminé yLS, mais se réduit rapidement, tandis que dans la deuxième de ces deux situations, l'écart latéral yL du véhicule automobile par rapport à la trajectoire cible est supérieur au seuil déterminé yLS et reste constant. Conformément au procédé qui a été décrit précédemment, dans la première de ces deux situations, le couple correctif filtré T_{CF} est annulé, puis, dans la deuxième de ces deux situations, couple correctif filtré T_{CF} est déterminé de manière à présenter une valeur non nulle, en l'occurrence égale à celle du couple correctif T_{C}. Sur cette figure, une fois que la valeur du couple correctif filtré T_{CF} a rejoint la valeur du couple correctif T_{C}, les courbes correspondantes sont d'ailleurs superposées (et ne se distinguent plus nettement l'une de l'autre).

Dans le cas de la figure 7B, bien que le couple correctif T_{C} s'oppose constamment au couple exercé T_{A}, le couple correctif filtré T_{CF} est déterminé de manière à présenter une valeur non nulle, en l'occurrence une valeur égale à celle du couple correctif filtré T_{C}. En effet, dans le cas de la figure 7B, l'écart latéral yL entre le véhicule automobile et la trajectoire cible est supérieur au seuil déterminé yLS, et qui plus est, augmente (rapidement) au cours du temps.

## Revendications

1. Procédé d'aide à la conduite d'un véhicule automobile empruntant une voie de circulation, comprenant les étapes suivantes :
a) on acquiert au moins une donnée (yL) relative à une position du véhicule automobile par rapport à la voie de circulation, ladite donnée comportant un écart latéral (yL) entre le véhicule automobile et ladite trajectoire cible,
b) on acquiert un couple exercé (T_{A}) par un conducteur du véhicule automobile sur un organe de direction (OD) du véhicule automobile,
c) on détermine, en fonction de ladite donnée (yL), un couple correctif (T_{C}) à exercer sur ledit organe de direction (OD), compte tenu dudit couple exercé (T_{A}), pour que le véhicule automobile suive une trajectoire cible,
d) on détermine un couple correctif filtré (T_{CF}) en fonction dudit couple correctif (T_{C}), de manière que ce couple correctif filtré (T_{CF}) présente systématiquement une valeur réduite par rapport à ce couple correctif (T_{C}) lorsque ledit couple exercé (T_{A}) s'oppose sensiblement audit couple correctif (T_{C}), et lorsque de plus ledit écart latéral (yL) est inférieur à un seuil déterminé (yLS), on annule le couple correctif filtré (T_{CF}), et
e) on exerce ledit couple correctif filtré (T_{CF}) sur l'organe de direction (OD) du véhicule automobile,
**caractérisé en ce que** :
à l'étape d), lorsque l'écart latéral (yL) est supérieur audit seuil déterminé (yLS), le couple correctif filtré (T_{CF}) est déterminé de manière à présenter une valeur non nulle à condition que ledit écart latéral (yL) ne se réduise pas avec un taux de variation supérieur à un taux de variation limite donné et il lui est affecté une valeur nulle sinon.

2. Procédé selon la revendication 1, dans lequel ledit taux de variation limite donné est déterminé en fonction de la valeur dudit écart latéral (yL).

3. Procédé selon l'une des revendications 1 ou 2, dans lequel, à l'étape d), lorsque l'écart latéral (yL) est supérieur audit seuil déterminé (yLS), le couple correctif filtré (T_{CF}) est déterminé de manière à présenter une valeur non nulle :
- qui est égale audit couple correctif (T_{C}) lorsque la valeur absolue dudit couple correctif (T_{C}) est inférieure à un couple de rappel limite (T_{R}), et
- qui présente une valeur absolue égale audit couple de rappel limite (T_{R}) lorsque la valeur absolue du couple correctif (T_{C}) est supérieure ou égale à ce couple de rappel limite (T_{R}).

4. Procédé selon la revendication 3, dans lequel le couple de rappel limite (T_{R}) est positif et est d'autant plus grand que ledit écart latéral (yL) est grand.

5. Procédé selon l'une des revendications 3 ou 4, dans lequel le couple de rappel limite (T_{R}) est positif et est d'autant plus grand que ledit écart latéral (yL) augmente rapidement.

6. Procédé selon l'une des revendications 1 à 5, dans lequel, à l'étape d), lorsque ledit couple exercé (T_{A}) par le conducteur et ledit couple correctif (T_{C}) présentent le même signe, on détermine ledit couple correctif filtré (T_{CF}) de manière que :
- lorsque la valeur absolue dudit couple correctif (T_{C}) est inférieure à un seuil de sécurité (T_{MAX}) donné, le couple correctif filtré (T_{CF}) soit égal audit couple correctif (T_{C}), et que
- lorsque la valeur absolue du couple correctif (T_{C}) est supérieure à ce seuil de sécurité (T_{MAX}), le couple correctif filtré (T_{CF}) présente une valeur absolue égale à ce seuil de sécurité (T_{MAX}).

7. Procédé selon l'une des revendications 1 à 6, dans lequel, à l'étape d) :
- lorsque le véhicule automobile est situé du côté intérieur d'un virage de ladite voie de circulation, et
- que la valeur absolue du couple exercé (T_{A}) par le conducteur est supérieure à un couple limite (T_{ACT}),
alors, on annule le couple correctif filtré (T_{CF}).

## Patentansprüche

1. Fahrerassistenzverfahren für ein Kraftfahrzeug, das eine Fahrspur benutzt, die folgenden Schritte umfassend:
a) Es wird wenigstens ein Datenelement (yL) erfasst, das sich auf eine Position des Kraftfahrzeugs in Bezug auf die Fahrspur bezieht, wobei das Datenelement eine seitliche Abweichung (yL) zwischen dem Kraftfahrzeug und der Zieltrajektorie enthält,
b) es wird ein Drehmoment (T_{A}) erfasst, das von einem Fahrer des Kraftfahrzeugs auf ein Lenkorgan (OD) des Kraftfahrzeugs ausgeübt wird,
c) es wird in Abhängigkeit von dem Datenelement (yL) ein Korrekturdrehmoment (T_{C}) bestimmt, das auf das Lenkorgan (OD) unter Berücksichtigung des ausgeübten Drehmoments (T_{A}) ausgeübt werden muss, damit das Kraftfahrzeug einer Zieltrajektorie folgt,
d) es wird ein gefiltertes Korrekturdrehmoment (T_{CF}) in Abhängigkeit von dem Korrekturdrehmoment (T_{C}) so bestimmt, dass das gefilterte Korrekturdrehmoment (T_{CF}) systematisch einen in Bezug auf dieses Korrekturdrehmoment (T_{C}) verringerten Wert aufweist, wenn das ausgeübte Drehmoment (T_{A}) dem Korrekturdrehmoment (T_{C}) wesentlich entgegenwirkt, und wenn außerdem die seitliche Abweichung (yL) kleiner als ein bestimmter Schwellenwert (yLS) ist, wird das gefilterte Korrekturdrehmoment (T_{CF}) gleich null gesetzt, und
e) es wird das gefilterte Korrekturdrehmoment (T_{CF}) auf das Lenkorgan (OD) des Kraftfahrzeugs ausgeübt,
**dadurch gekennzeichnet, dass**
in Schritt d), wenn die seitliche Abweichung (yL) größer als der bestimmte Schwellenwert (yLS) ist, das gefilterte Korrekturdrehmoment (T_{CF}) so bestimmt wird, dass es einen von null verschiedenen Wert aufweist, sofern sich die seitliche Abweichung (yL) nicht mit einer Änderungsgeschwindigkeit verringert, die größer als eine gegebene Grenzänderungsgeschwindigkeit ist, und dass ihm andernfalls ein Wert null zugewiesen wird.

2. Verfahren nach Anspruch 1, wobei die gegebene Grenzänderungsgeschwindigkeit in Abhängigkeit vom Wert der seitlichen Abweichung (yL) bestimmt wird.

3. Verfahren nach einem der Ansprüche 1 oder 2, wobei im Schritt d), wenn die seitliche Abweichung (yL) größer als der bestimmte Schwellenwert (yLS) ist, das gefilterte Korrekturdrehmoment (T_{CF}) so bestimmt wird, dass es einen von null verschiedenen Wert aufweist:
- welcher gleich dem Korrekturdrehmoment (T_{C}) ist, wenn der absolute Betrag des Korrekturdrehmoments (T_{C}) kleiner als ein Grenzrückstellmoment (T_{R}) ist, und
- welcher einen absoluten Betrag aufweist, der gleich dem Grenzrückstellmoment (T_{R}) ist, wenn der absolute Betrag des Korrekturdrehmoments (T_{C}) größer oder gleich diesem Grenzrückstellmoment (T_{R}) ist.

4. Verfahren nach Anspruch 3, wobei das Grenzrückstellmoment (T_{R}) positiv ist und umso größer ist, je größer die seitliche Abweichung (yL) ist.

5. Verfahren nach einem der Ansprüche 3 oder 4, wobei das Grenzrückstellmoment (T_{R}) positiv ist und umso größer ist, je schneller sich die seitliche Abweichung (yL) vergrößert.

6. Verfahren nach einem der Ansprüche 1 bis 5, wobei im Schritt d), wenn das vom Fahrer ausgeübte Drehmoment (T_{A}) und das Korrekturdrehmoment (T_{C}) dasselbe Vorzeichen aufweisen, das gefilterte Korrekturdrehmoment (T_{CF}) so bestimmt wird, dass:
- wenn der absolute Betrag des Korrekturdrehmoments (T_{C}) kleiner als ein gegebener Sicherheitsschwellenwert (T_{MAX}) ist, das gefilterte Korrekturdrehmoment (T_{CF}) gleich dem Korrekturdrehmoment (T_{C}) ist, und dass,
- wenn der absolute Betrag des Korrekturdrehmoments (T_{C}) größer als dieser Sicherheitsschwellenwert (T_{MAX}) ist, das gefilterte Korrekturdrehmoment (T_{CF}) einen absoluten Betrag aufweist, der gleich diesem Sicherheitsschwellenwert (T_{MAX}) ist.

7. Verfahren nach einem der Ansprüche 1 bis 6, wobei im Schritt d):
- wenn sich das Kraftfahrzeug auf der Innenseite einer Kurve der Fahrspur befindet, und
- wenn der absolute Betrag des vom Fahrer ausgeübten Drehmoments (T_{A}) größer als ein Grenzdrehmoment (T_{ACT}) ist,
das gefilterte Korrekturdrehmoment (T_{CF}) gleich null gesetzt wird.

## Claims

1. Driver-assistance method for a motor vehicle moving in a traffic lane, comprising the following steps:
a) at least one data item (yL) is acquired in relation to a position of the motor vehicle relative to the traffic lane, said data item including a lateral offset (yL) between the motor vehicle and said target path,
b) a torque (T_{A}) applied by a driver of the motor vehicle to a steering member (OD) of the motor vehicle is acquired,
c) a corrective torque (T_{C}) to be applied to said steering member (OD) is determined, as a function of said data item (yL), taking into account said applied torque (T_{A}) so that the motor vehicle follows a target path,
d) a filtered corrective torque (T_{CF}) is determined on the basis of said corrective torque (T_{C}) such that the value of this filtered corrective torque (T_{CF}) is systematically less than that of this corrective torque (T_{C}) when said applied torque (T_{A}) substantially opposes said corrective torque (T_{C}), and when, furthermore, said lateral offset (yL) is below a particular threshold (yLS), the filtered corrective torque (T_{CF}) is cancelled, and
e) said filtered corrective torque (T_{CF}) is applied to the steering member (OD) of the motor vehicle
**characterized in that**:
in the step d), if the lateral offset (yL) is above said particular threshold (yLS), the filtered corrective torque (T_{CF}) is determined in such a manner as to have a non-zero value on condition that said lateral offset (yL) is not decreasing with a rate of variation greater than a given limit rate of variation and it is assigned a non-zero value otherwise.

2. Method according to Claim 1, in which said given limit rate of variation is determined as a function of the value of said lateral offset (yL).

3. Method according to either one of Claims 1 and 2, in which, in the step d), if the lateral offset (yL) is above said particular threshold (yLS), the filtered corrective torque (T_{CF}) is determined in such a manner as to have a non-zero value:
- that is equal to said corrective torque (T_{C}) if the absolute value of said corrective torque (T_{C}) is less than a limit return torque (T_{R}), and
- that has an absolute value equal to said limit return torque (T_{R}) if the absolute value of the corrective torque (T_{C}) is greater than or equal to that limit return torque (T_{R}).

4. Method according to Claim 3, in which the limit return torque (T_{R}) is positive and increases if said lateral offset (yL) increases.

5. Method according to either one of Claims 3 and 4, in which the limit return torque (T_{R}) is positive and increases if said lateral offset (yL) increases rapidly.

6. Method according to any one of Claims 1 to 5, in which, in the step d), if said torque (T_{A}) applied by the driver and said corrective torque (T_{C}) have the same sign, said filtered corrective torque (T_{CF}) is determined in such a manner that:
- if the absolute value of said corrective torque (T_{C}) is below a given safety threshold (T_{MAX}), the filtered corrective torque (T_{CF}) is equal to said corrective torque (T_{C}), and
- if the absolute value of the corrective torque (T_{C}) is above this safety threshold (T_{MAX}), the filtered corrective torque (T_{CF}) has an absolute value equal to this safety threshold (T_{MAX}).

7. Method according to any one of Claims 1 to 6, in which the filtered corrective torque (T_{CF}) is cancelled if in the step d):
- the motor vehicle is situated on the inside of a turn of said traffic lane, and
- the absolute value of the torque (T_{A}) applied by the driver is greater than a limit torque (T_{ACT}).
